# EUROPEAN PATENT SPECIFICATION

(11) **EP 2 178 803 B1**
(45) Date of publication and mention of the grant of the patent: **26.10.2016**
(21) Application number: 07801713.4
(22) Date of filing: 16.08.2007
(51) Int. Cl.: C02F 9/10, C02F 11/12, C02F 11/06, C02F 1/04

(54) **SEWAGE TREATMENT SYSTEM AND SEWAGE TREATMENT METHOD**
ABWASSERBEHANDLUNGSSYSTEM UND ABWASSERBEHANDLUNGSVERFAHREN
SYSTÈME ET PROCÉDÉ DE TRAITEMENT D'EAUX USÉES

(43) Date of publication of application: 28.04.2010
(73) Proprietor: King Abdulaziz City for Science and Technology, Riyadh 11442 (SA)
(72) Inventor: BAABBAD, Mazen, Abdullah, Riyadh 11442 (SA); AL-ANSARI, Hany, Abdulrahman, Riyadh 11412 (SA); AL-BAHKALI, Essam, Ali, Riyadh 11421 (SA); SURAH, Davinder, Riyadh 11441 (SA)
(74) Representative: Goddar, Heinz J.
(86) International application number: PCT/EP2007/007260
(87) International publication number: WO 2009/021538

(56) References cited:
- WO-A-2004/046279
- GB-A- 1 408 606
- JP-A- 6 058 522
- JP-A- 58 079 583
- US-A- 3 687 646
- US-A- 4 045 341
- US-A1- 2003 051 647
- US-B1- 6 398 921

## Description

The present invention relates to a sewage treatment system and method to obtain purified water from raw sewage.

Sewage or waster water from domestic or industrial sources may contain organic and inorganic material in floating or suspended form. Such material is typically referred to as sludge. Sewage may further contain additional substances in dissolved form.

Several sewage treatment methods based on physical, chemical, and/or biological treatment steps are known for cleaning sewage and purifying the water contained therein for re-use. Typically, in a first step, sludge is separated from raw sewage and, in a second step, thus pre-cleaned sewage is purified using complex filtration techniques followed by chemical treatment steps using e.g. chlorine gas for disinfection, making current sewage treatment systems highly complex.

The separated sludge is subsequently treated using well known methods such as dewatering, thickening, digestion, etc. before being disposed of by land filling or being used in a number of utilization options, such as in agricultural fertilizers and soil conditioners or in energy generation.

Energy generation from sludge is typically effected in the form of incinerating sludge at dedicated thermal treatment sites and using the process heat for power generation. Alternatively, it is effected in the form of decomposition of sludge to release bio-gases such as methane, which are then burned in dedicated facilities in order to generate power therefrom. However, incineration in such facilities typically leads to gaseous and potentially toxic emissions as well as the release of unpleasant odours. Also, the amount of energy extracted as reusable energy is offset by, for instance, the energy used in transporting the sludge from its source to the site of incineration.

WO2004/046279A discloses a system for treating sewage comprising the separation of sludge from sewage by means of a centrifuge and purification of the sewage by heat treatment and evaporation. The heat required for the heat treatment and the evaporation is obtained by burning the separated sludge.

It is therefore an object of the present invention to provide a sewage treatment system and method for treating sewage in a more energy-efficient and environmentally-friendly as well as less complex manner.

This object is achieved by the sewage treatment system or facility according to claim 1 and the sewage treatment method according to claim 6 of the present application.

The sewage treatment facility according to the present invention comprises a separation unit adapted to separate sewage sludge from sewage to obtain pretreated sewage, heat generation means, such as a furnace, adapted to generate heat from separated sewage sludge, a purifier unit adapted to evaporate pretreated sewage and re-condense evaporated water contained therein (i.e. in the evaporated pretreated sewage), and heat transfer means adapted to transfer heat from the heat generation means to the purifier unit, wherein the transferred heat is used to evaporate pre-treated sewage.

The solution according to the present invention thus uses sludge separated from raw sewage to generate heat which is subsequently used to purify the pre-treated sewage from which the sludge was extracted. Since the treatment process is effected within the same facility, i.e. at the same site, the waste of energy involved in having to both transport sludge from its source to a power generation site and part of the resultant power back to the sewage treatment facility (where power is required for running purification processes, for instance) is thus avoided.

A further advantage of the present invention is provided by the purely physical process (evaporation/condensation), which is applied to purify the waste water, obviating or at least reducing the need for complex filtration and/or potentially hazardous chemical or biological treatment. Moreover, making direct use of the generated heat, i.e. without any conversion into other forms of energy, dispenses with the requirement for complex conversion units and methods, thus further reducing both energy losses and capital expenditure.

According to one aspect of the present invention, the facility's heat generation means includes a two-stage furnace comprising a gasifier adapted to gasify sewage sludge and a burner adapted to burn the gasified sewage sludge. This two-stage combustion comprising gasification/char burning provides for a cleaner combustion process in comparison to conventional single-stage combustors. The heat generation means may further include means adapted to transfer gasified sewage sludge from the gasifier to the burner.

According to the present invention, the sewage treatment facility further comprises an exhaust cleaning unit having an exhaust duct with gas inlets adapted to mix exhaust gas from the furnace with combustible gas such as liquefied petroleum gas (LPG) and recombust the resultant mixture. In addition thereto, the exhaust duct comprises showering means adapted to spray pretreated sewage into the exhaust duct. The recombusting and the spraying of pretreated sewage serve the purpose of cleaning and/or neutralizing the exhaust gases originating from the furnace as well as reducing unpleasant odours. The spraying further serves the purpose of transferring heat from the exhaust gas and the exhaust duct to the pretreated sewage.

According to the present invention, the exhaust duct forming part of the exhaust cleaning unit is thermally connected to heat transfer means adapted to absorb heat from hot exhaust gas passing through the exhaust duct and heat generated by recombusting the exhaust gas/LPG mixture inside the exhaust duct and transfer the absorbed heat from the exhaust duct to the purifier unit, where it is used to evaporate pretreated sewage. Thereby, the reuse of energy within the facility is further increased, making the facility even more energy-efficient. At the same time, the local temperature inside the exhaust duct may be controlled effectively. According to another aspect, the pretreated sewage can be filtered subsequent to the step of sludge separation and preferably prior to any further steps using e.g. a sand filter to further remove suspended solids and the like, which otherwise might accumulate in the purifier unit or block the showering means in the course of time.

The purifier unit comprises an evaporator adapted to evaporate pretreated sewage and a condenser adapted to re-condense water contained in the evaporated sewage.

A sewage treatment method according to the present invention comprises the steps of receiving sewage at a sewage treatment facility or site, separating sewage sludge from the sewage on-site to obtain pretreated sewage, using separated sewage sludge on-site to generate heat, and using the heat on-site to evaporate pretreated sewage and re-condense the evaporated water contained therein. Thus, all the treatment steps are effected within the same facility.

According to another aspect of the method according to the present invention, generating heat comprises gasifying the sewage sludge followed by burning the gasified sewage sludge.

The method may further comprise the step of mixing exhaust gas produced by generating heat from sewage sludge with combustible gas such as liquefied petroleum gas and recombusting the resultant mixture. In addition thereto, the method also comprises the step of spraying exhaust gas produced by generating heat from the sewage sludge with pretreated and optionally filtered sewage. In case both steps are applied, the exhaust gas is preferably first re-combusted before being sprayed with pretreated and optionally filtered sewage. The inverted sequence, may, however, also be considered.

According to the invention, the method further comprises the step of using the heat contained in exhaust gas produced by generating heat from sewage sludge (e.g. in the form of incineration of sludge) and/or re-combusting the mixture of exhaust gas and combustible gas to support the process of evaporating pretreated sewage. This may happen either through direct contact between the hot exhaust gas and the pretreated sewage, whereby the pretreated sewage is preheated, or by capturing, transferring and using this heat to evaporate the pretreated sewage, i.e. without direct contact between pretreated sewage and exhaust gas.

Thus, according to the present invention, sewage is treated in an energy-efficient, environmentally-friendly, and simple manner. This is achieved by combining at a single treatment site the steps of extracting and using the energy inherent in (raw) sewage for the purpose of obtaining purified water from the sewage. Also, potentially hazardous emissions and obnoxious odours typically occurring in sewage treatment processes are substantially reduced.

Further details and characteristics of the invention will be set forth below in conjunction with the drawings, where
Figure 1 illustrates a sewage treatment facility according to the present invention;
Figure 2 illustrates a two-stage furnace forming part of the facility according to the present invention;
Figure 3 illustrates an exhaust cleaning unit forming part of the facility according to the present invention; and
Figure 4 illustrates an evaporator forming part of the facility according to the present invention.

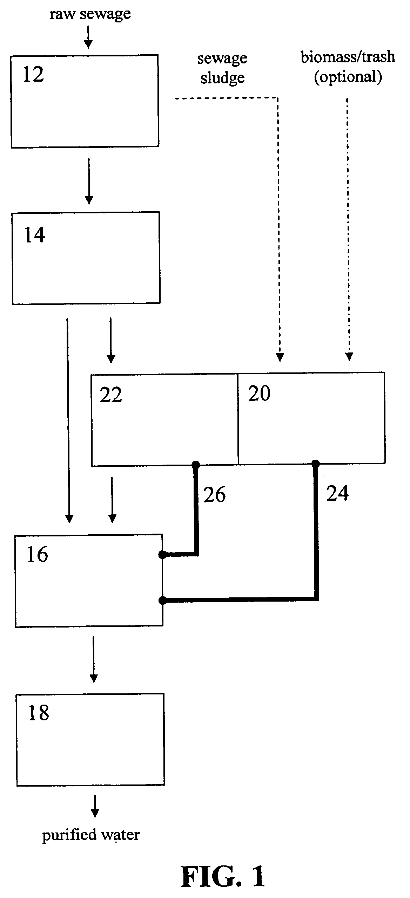

The sewage treatment facility illustrated schematically in figure 1 comprises a sludge separation unit 12, a sand filter 14, an evaporator 16, and a condenser 18. The sewage treatment facility further comprises a furnace 20 having attached thereto an exhaust cleaning unit 22. The furnace 20 is thermally coupled to the evaporator 16 by first heat transfer means 24. The exhaust cleaning unit 22 is thermally coupled to the evaporator 16 by second heat transfer means 26.

Typical linear dimensions of the facility are of the order of several meters. A typical overall size of the facility illustrated schematically in figure 1 is 10m x 15m x 3m.

The sludge separation unit 12 receives raw sewage and separates suspended and floating sludge, grease, solids, etc. from the raw sewage using a centrifuge. The thus pretreated sewage is guided from the separation unit 12 to a sand filter 14, through which it percolates. One part of the pre-treated and filtered sewage enters the evaporator 16. Inside the evaporator 16, which together with the condenser 18 forms a purifier unit, the sewage is evaporated. The evaporated fluid subsequently enters condenser 18, where the water contained therein is re-condensed to obtain purified water.

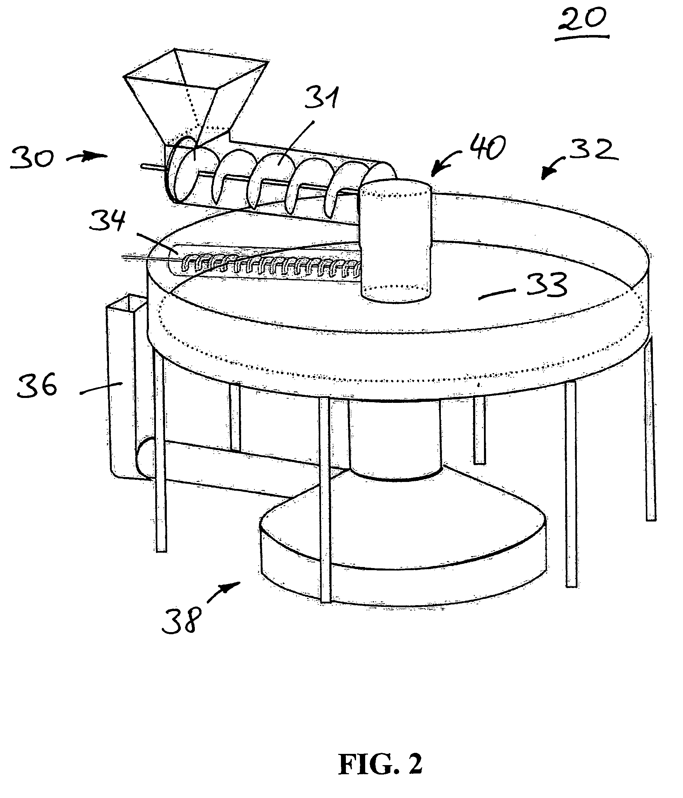

Subsequent to suitable dewatering and drying, e.g. using fresh combustion air and/or the heat of the furnace 20, the sludge separated from the raw sewage and extracted from the separation unit 12 is being conveyed to furnace 20, illustrated in figure 2, to generate heat required to purify the pretreated and filtered sewage leaving sand filter 14.

The furnace 20 comprises a sludge injector 30, a gasifier 32 including a hot plate 33, a char screw 34 arranged above the surface of the hot plate, a char feed 36 arranged at one end of the char screw 34, a char burner 38 arranged below the gasifier, and an exhaust 40.

Sludge from the separation unit 12 is fed (e.g. via a conveyor belt) into injector 30 which is arranged above the gasifier 32. Injector 30 distributes the sludge across hot plate 33 of the gasifier 32 using a screw conveyer 31. Hot plate 33 is rotated relative to injector 30 and char screw 34 using a bevel gear system and is held in place by idle gears (not shown). The sludge falling onto hot plate 33 from injector 30 remains on the circular, disc-shaped hot plate 33 for a residence time, which is dependent on the rotational speed of hot plate 33, until being removed from hot plate 33 by char screw 34 extending radially across the hot plate 33 along approximately half the diameter of hot plate 33. A typical residence time is 30 seconds, during which effective dioxin destruction takes place. The hot plate 33 is typically operated at a temperature of between 700°C and 800°C. Other temperatures above or below this range are also envisaged, however.

Char screw 34 conveys the gasified sludge from hot plate 33 to char feed 36, which then conveys (or "feeds") the gasified sludge into the char burner 38, where it is burned. The char burner 38 typically reaches a temperature of between 1200°C and 1600°C. Other temperatures above or below this range are also envisaged, however.

Burning is thus effected in two stages, wherein air and/or LPG is controllably and independently supplied to both stages. Exhaust gases from both stages leave the furnace through an exhaust outlet 40. The exhaust outlet 40 is a pipe which at its one end is connected to the top of char burner 38. Exhaust gases generated inside char burner 38 rise along exhaust 40, which extends through the centre of gasifier 32/hot plate 33 and has openings to the inside of the gasifier 32 to allow exhaust gases generated inside gasifier 32 to be removed therefrom via exhaust 40.

Heat generated inside furnace 20 is partly used to heat hot plate 33 and partly collected using oil heat exchangers (not shown) located and attached to char burner 38 as well as exhaust 40. The oil heat exchangers form part of the first heat transfer means 24 thermally coupling the furnace 20 with the evaporator 16.

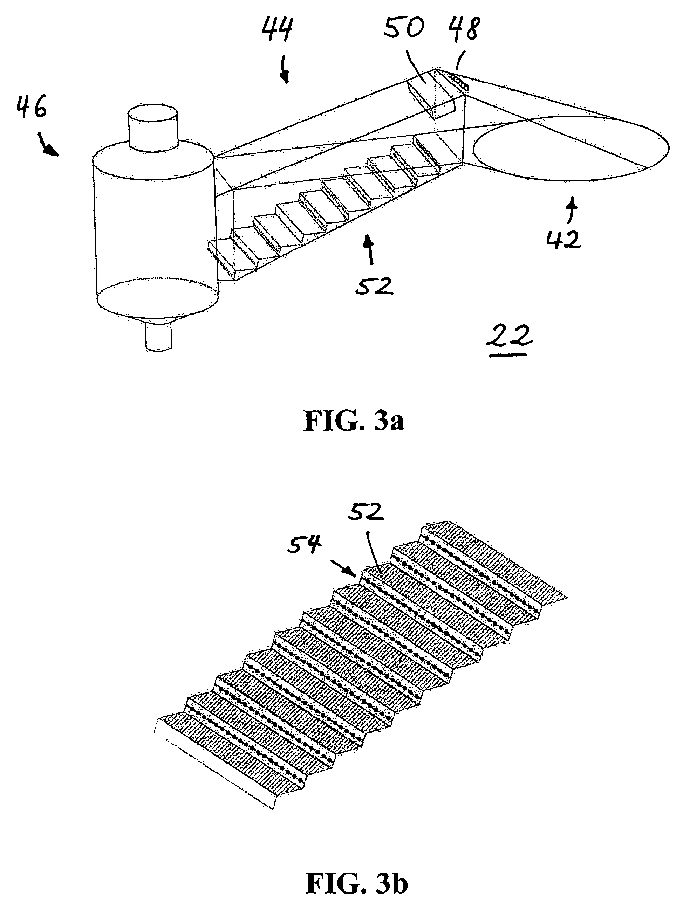

Exhaust gases leaving furnace 20 via exhaust 40 subsequently enter the exhaust cleaning unit 22, shown in figure 3a. Exhaust cleaning unit 22 comprises a first section 42 through which the exhaust gases from exhaust 40 enter the cleaning unit 22 and which is connected to exhaust 40, a second intermediate section in the form of an exhaust duct 44, and a third section 46 serving as both a chimney for cleaned exhausts (top part) and funnel for fluid collection (lower part).

The exhaust duct 44 has LPG inlets in the form of nozzles 48 for injecting and mixing liquefied petroleum gas, premixed with air and ignited (by self-ignition), into the exhaust stream coming from the furnace 20 and recombusting the mixture for the purpose of cleaning the exhaust stream. Downstream of the LPG nozzles 48, an oil heat exchanger 50 is attached to the exhaust duct 44 to absorb heat from both the exhaust gas and the exhaust duct 44. Oil heat exchanger 50 forms part of the second heat transfer means 26 shown in figure 1.

Inside the exhaust duct 44 and at its bottom, several steps 52 with openings or nozzles 54 are disposed, illustrated in more detail in Figure 3b. The nozzles 54 are arranged in rows along the edge of each step 52 so as to be capable of releasing and spraying pre-treated sewage received from the sand filter 14 into a downstream direction of the exhaust gas stream. The sprayed sewage, containing alkaline substances such as soap, detergents, urea, etc., neutralises and removes acids from the exhaust stream and takes up heat from the hot exhaust gas at the same time.

The amount of sewage sprayed into the air duct 44 and the capacity of heat absorption of the oil heat exchanger 50 are tuned to effectively control the temperature inside the air duct 44 as well as the heat taken up by the sprayed sewage. This is done to pre-heat the sprayed sewage inside the air duct 44 without evaporating it inside the exhaust cleaning unit 22.

The pretreated sewage sprayed from the rows of nozzles 54 in the downwardly cascading sequence of steps 52 is guided down the exhaust duct 44 into the funnel of the final section 46 of the exhaust cleaning unit 22. The thus preheated pretreated sewage is then transferred to evaporator 16. The stream of cleaned and cooled exhaust gas, on the other hand, will naturally follow the downwardly sloped exhaust duct 44 before being ejected via the chimney of the final section 46.

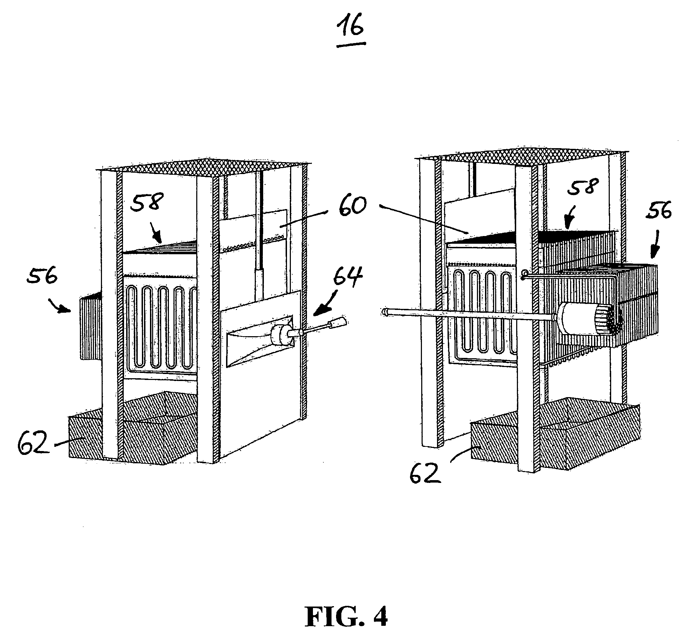

Figure 4 illustrates the evaporator unit 16, comprising an air heat exchanger 56, several heated plates 58, salt cleaning brushes 60, a salt collection box 62, and an air blower 64.

The heated plates 58 are arranged in parallel. Each of the heated plates 58 comprises meandering heater tubes which are connected (not shown) to both the first heat transfer means 24 and the second heat transfer means 26 to receive heat. Both heat transfer means 24 and 26 use oil to heat the plates 58, wherein circulating oil takes up heat in the heat exchangers attached to the furnace 20 and the exhaust cleaning unit 22, respectively, and gives off heat via the heater tubes attached to the plates 58.

The pretreated, filtered and partially preheated sewage is sprinkled onto the heated plates 58 to become evaporated. The evaporated fluid leaves behind deposits, such as salts, which are cleaned off from the heater plates 58 and into the collection box 62 below using cleaning brushes 60. Cleaning brushes 60 may be actuated in regular intervals or on demand to perform a sliding motion in between the plates 58.

Using air blower 64, which is arranged on one side of the plates 58, preheated dry air is forced through the arrangement of heated plates 58 substantially parallel to the plates 58. The preheated air passing through the plates 58 accumulates evaporated water along the way. The hot, moist air leaving the arrangement of heater plates 58 on the opposite side of the heated plates 58 subsequently enters the air heat exchanger 56. The air heat exchanger 56 uses the heat from the hot moist air to heat up fresh, dry air, which subsequently serves as the preheated dry air to be forced through the arrangement of heater plates 58. The precooled, moist air leaving the air heat exchange 56 is then sent to the condenser 18.

Condenser 18 further cools the moist air up to the point at which the moisture contained therein condenses. The condensed water is then collected and ready for further use.

Any traces of liquids other than water, typically being organic and volatile, will usually not condense in condenser 18 but rather exit the system as non-condensable gasses.

It is to be understood that the invention may be practiced within the scope of the claims differently from the examples described. For instance, organic waste/trash may be fed into the furnace 20 in addition to sludge. Further, heat may be transferred from the furnace/air duct using other means than oil.

## Claims

1. Sewage treatment system, comprising
a separation unit (12) for separating sewage sludge from sewage to obtain pretreated sewage;
heat generation means (20) for generating heat from separated sewage sludge;
a purifier unit (16, 18) for evaporating pretreated sewage and re-condensing evaporated water contained therein;
first heat transfer means (24) for transferring heat from the heat generation means (20) to the purifier unit (16, 18); and
an exhaust cleaning unit (22) having an exhaust duct (44) for receiving exhaust gas from the heat generation means (20), the exhaust duct (44) having gas inlets (48) for mixing the exhaust gas with combustible gas such as liquefied petroleum gas and re-combusting the resultant mixture,
wherein
the exhaust duct (44) further comprises showering means (52, 54) for spraying pretreated sewage obtained in the separation unit (12) into the exhaust duct (44); and
wherein
the exhaust duct (44) comprises a heat exchanger (50) thermally coupling the exhaust duct (44) to second heat transfer means (26) for transferring heat from the exhaust duct (44) to the purifier unit (16, 18).

2. Sewage treatment system according to claim 1, wherein
the heat generation means (20) comprises a gasifier (32) for gasifying sewage sludge and a burner (38) for burning gasified sewage sludge.

3. Sewage treatment system according to claim 2, wherein
the heat generation means (20) further comprises means (34, 36) for transferring gasified sewage sludge from the gasifier (32) to the burner (38).

4. Sewage treatment system according to any one of the preceding claims, further comprising a filter (14) for filtering the pretreated sewage.

5. Sewage treatment system according to any one of the preceding claims, wherein the purifier unit (16, 18) comprises an evaporator (16) and a condenser (18).

6. Sewage treatment method, comprising the steps of
receiving sewage at a sewage treatment site;
separating sewage sludge from sewage on-site to obtain pretreated sewage;
using separated sewage sludge on-site to generate heat;
using the heat on-site to evaporate pretreated sewage and re-condense the evaporated water contained therein;
spraying exhaust gas produced by generating heat from sewage sludge with pretreated and optionally filtered sewage; and using the heat contained in the exhaust gas produced by generating heat from sewage sludge and/or re-combusting the mixture of exhaust gas and combustible gas to evaporate pretreated sewage.

7. Sewage treatment method according to claim 6, wherein
generating heat comprises gasifying the sewage sludge followed by burning the gasified sewage sludge.

8. Sewage treatment method according to claim 6 or 7, further comprising the step of
mixing exhaust gas produced by generating heat from sewage sludge with combustible gas such as liquefied petroleum gas and re-combusting the resultant mixture.

## Patentansprüche

1. Abwasserreinigungssystem, umfassend
eine Trenneinheit (12) zum Trennen von Klärschlamm von Abwasser, um ein vorbehandeltes Abwasser zu erhalten;
Mittel zur Erzeugung von Wärme (20) zur Erzeugung von Wärme aus dem abgetrennten Klärschlamm;
eine Reinigungseinheit (16, 18) zum Verdampfen des vorbehandelten Abwassers und Rekondensieren des darin enthaltenen Wassers;
erste Mittel zum Überführen von Wärme (24) zum Überführen von Wärme von den Mitteln zur Erzeugung von Wärme (20) zu der Reinigungseinheit (16, 18); und
eine Einheit zum Reinigen von Abluft (22) mit einer Abluftleitung (44) zum In-Empfang-Nehmen von Abluftgas aus den Mitteln zur Erzeugung von Wärme (20), wobei die Abluftleitung (44) Gaseinlässe (48) zum Mischen des Abluftgases mit einem brennbaren Gas, wie etwa Flüssiggas (liquefied petroleum gas), hat und Entzünden des resultierenden Gemisches,
wobei
die Abluftleitung (44) ferner Mittel zum Übergießen (52, 54) zum Sprühen des vorbehandelten Abwassers umfasst, das in der Trenneinheit (12) gehalten wird, in die Abluftleitung (44) und
wobei
die Abluftleitung (44) einen Wärmetauscher (50) umfasst, der die Abluftleitung (44) thermisch mit zweiten Mitteln zur Überführung von Wärme (26) verbindet, um Wärme von der Abluftleitung (44) zu der Reinigungseinheit (16, 18) zu überführen.

2. Abwasserreinigungssystem nach Anspruch 1, wobei
die Mittel zur Erzeugung von Wärme (20) einen Vergaser (32) zum Vergasen des Klärschlamms und einen Brenner (38) zum Verbrennen des vergasten Klärschlamms umfassen.

3. Abwasserreinigungssystem nach Anspruch 2, wobei
die Mittel zur Erzeugung von Wärme (20) ferner Mittel (34, 36) umfassen, um den vergasten Klärschlamm von dem Vergaser (32) zu dem Brenner (38) zu überführen.

4. Abwasserreinigungssystem nach einem der vorangehenden Ansprüche, das ferner einen Filter (14) zum Filtern des vorbehandelten Abwassers umfasst.

5. Abwasserreinigungssystem nach einem der vorangehenden Ansprüche, wobei die Reinigungseinheit (16, 18) einen Verdampfer (16) und einen Kondensator (18) umfasst.

6. Verfahren zur Reinigung von Abwasser, umfassend die Schritte:
In-Empfang-Nehmen eines Abwassers an einer Abwasserreinigungsseite;
Trennen eines Klärschlamms von dem Abwasser vor Ort, um ein vorbehandeltes Abwasser zu erhalten;
Verwenden des abgetrennten Klärschlamms vor Ort, um Wärme zu erzeugen;
Verwenden der Wärme vor Ort, um das vorbehandelte Abwasser zu verdampfen und das verdampfte Wasser, das darin enthalten ist, zu kondensieren;
Sprühen eines Abluftgases, das durch Wärmeerzeugung aus dem Klärschlamm mit vorbehandeltem und optional gefiltertem Abwasser erhalten wird; und Verwenden der Wärme, die in dem Abluftgas enthalten ist, das durch die erzeugte Wärme aus dem Klärschlamm und/oder dem Entzünden des Gemisches von Abluftgas und brennbarem Gas erhalten wurde, um das vorbehandelte Abwasser zu verdampfen.

7. Verfahren zur Reinigung von Abwasser nach Anspruch 6, wobei
das Erzeugen von Wärme das Vergasen des Klärschlamms, gefolgt vom Verbrennen des vergasten Klärschlamms, umfasst.

8. Verfahren zur Behandlung von Abwasser nach Anspruch 6 oder 7, ferner umfassend den Schritt:
Mischen des Abluftgases, das durch Erzeugen von Wärme aus dem Klärschlamm mit dem verbrennbaren Gas, wie etwa Flüssiggas, und Verbrennen des resultierenden Gemisches, erhalten wird.

## Revendications

1. Système de traitement des eaux usées, comprenant :
une unité de séparation (12) assurant la séparation des boues d'épuration des eaux usées, afin d'obtenir des eaux usées prétraitées ;
un dispositif de génération thermique (20) permettant de produire de la chaleur à partir de boues d'épuration séparées ;
un épurateur (16, 18) pour l'évaporation d'eaux usées prétraitées, et la recondensation d'eau évaporée contenue dans celui-ci ;
un premier dispositif de transfert de la chaleur (24) pour transférer de la chaleur du dispositif de génération thermique (20) à l'épurateur (16, 18) ; et
un appareil de nettoyage de l'évacuation (22), possédant un conduit d'évacuation (44) pour recevoir le gaz d'évacuation du dispositif de génération thermique (20), le conduit d'évacuation (44) possédant des dispositifs d'entrée de gaz (48) pour assurer le mélange du gaz d'évacuation avec un gaz combustible, par exemple du gaz de pétrole liquéfié, et la recombustion du mélange résultant,
le conduit d'évacuation (44) comprenant en outre un dispositif de pulvérisation (52, 54) permettant de pulvériser des eaux usées prétraitées obtenues dans l'unité de séparation (12), dans le conduit d'évacuation (44) ; et
le conduit d'évacuation (44) comprenant un échangeur de chaleur (50) assurant l'accouplement thermique du conduit d'évacuation (44) avec le deuxième dispositif de transfert thermique (26) pour transférer de la chaleur du conduit d'évacuation (44) à l'épurateur (16, 18).

2. Système de traitement des eaux usées selon la revendication 1,
le dispositif de génération thermique (20) comprenant un gazéificateur (32) assurant la gazéification de boues d'épuration, et un brûleur (38) pour la combustion de boues d'épuration gazéifiées.

3. Système de traitement des eaux usées selon la revendication 2,
le dispositif de génération thermique (20) comprenant également un dispositif (34, 36) de transfert de boues d'épuration gazéifiées du gazéificateur (32) au brûleur (38).

4. Système de traitement des eaux usées selon une quelconque des revendications précédentes, comprenant également un filtre (14) pour le filtrage des eaux usées prétraitées.

5. Système de traitement des eaux usées selon une quelconque des revendications précédentes, l'épurateur (16, 18) comprenant un évaporateur (16) et un condenseur (18).

6. Méthode de traitement des eaux usées, comprenant les étapes suivantes :
réception des eaux usées dans une station d'épuration des eaux usées ;
séparation de boues d'épuration des eaux usées sur site, pour obtenir des eaux usées prétraitées ;
utilisation des boues d'épuration séparées sur site pour produire de la chaleur ;
utilisation de la chaleur sur site pour assurer l'évaporation de boues prétraitées, et recondenser l'eau évaporée qu'elles contiennent ;
pulvérisation des gaz d'évacuation produits par la production de chaleur à partir de boues d'épuration avec des eaux usées prétraitées, et, en option, filtrées ; et utilisation de la chaleur contenue dans les gaz d'évacuation produits par la production de chaleur à partir de boues d'épuration et/ou de la recombustion du mélange de gaz d'évacuation et de gaz combustible pour évaporer les boues prétraitées.

7. Méthode de traitement des eaux usées selon la revendication 6,
la production de la chaleur comprenant la gazéification des boues d'épuration, suivie de la combustion de boues d'épuration gazéifiées.

8. Méthode de traitement des eaux usées selon la revendication 6, ou 7, comprenant également l'étape de mélange du gaz d'évacuation produit par la production de chaleur à partir de boues d'épuration avec un gaz combustible, par exemple du gaz de pétrole liquéfié, et la recombustion du mélange résultant.
